# EUROPEAN PATENT SPECIFICATION

(11) **EP 3 293 224 B1**
(45) Date of publication and mention of the grant of the patent: **18.12.2019**
(21) Application number: 17185228.8
(22) Date of filing: 08.08.2017
(51) Int. Cl.: C08L 7/00, C08L 9/00, B60C 1/00, C08J 3/22, C08K 3/22, C08K 5/098, C08K 3/36

(54) **RUBBER COMPOSITION**
KAUTSCHUKZUSAMMENSETZUNG
COMPOSITION DE CAOUTCHOUC

(30) Priority: 29.08.2016 JP 2016166706
(43) Date of publication of application: 14.03.2018
(73) Proprietor: Sumitomo Rubber Industries, Ltd., Kobe-shi, Hyogo 651-0072 (JP)
(72) Inventor: MIYAZAKI, Tatsuya, Kobe-shi, Hyogo 651-0072 (JP)
(74) Representative: TBK

(56) References cited:
- US-A- 5 302 315
- US-A1- 2010 056 684
- US-A1- 2011 082 234
- US-B2- 8 846 791
- DATABASE WPI Week 200830 Thomson Scientific, London, GB; AN 2008-E37517 XP002776979, & JP 2007 321041 A (SUMITOMO RUBBER IND LTD) 13 December 2007 (2007-12-13)

## Description

### [Technical Field]

The present invention relates to a rubber composition containing a rubber component, benzoic acid zinc and/or t-butyl benzoic acid zinc, and wet synthetic silica and/or aluminum hydroxide.

### [Technical Background]

Conventionally, as a method of suppressing reversion of a rubber product such as a tire, an anti-reversion agent is used. For example, Patent Document 1 discloses a rubber composition that allows rolling resistance to be reduced and processability, wear resistance and wet skid performance to be improved, while allowing reversion to be suppressed, by containing a predetermined rubber component, silica, and a mixture of an aliphatic carboxylic acid and an aromatic carboxylic acid zinc salt. Patent Document 2 discloses a rubber composition that allows rubber chipping resistance and wear resistance to be improved, while allowing low heat generation to be maintained, by containing a predetermined rubber component, sulfur and carbon black. However, in both Patent Documents 1 and 2, achieving both low fuel consumption and durability is not considered.

Further, in Patent Documents 3 - 5, as a rubber composition excellent in reversion suppression, aging resistance and vulcanization properties, a rubber composition is disclosed in which a cyclic polysulfide, a carboxylic acid zinc salt and a zinc oxide are blended into a diene-based rubber component. However, using benzoic acid zinc and/or t-butyl benzoic acid zinc in combination with wet synthetic silica and/or aluminum hydroxide is not described.

Also US 2011082234 (A1), US 5302315 (A), US2010056684 (A1) and US2011136961 (A1) provide relevant background art.

### [Related Art]

### [Patent Documents]

[Patent Document 1] Japanese Patent Laid-Open Publication No. 2007-321041.
[Patent Document 2] Japanese Patent Laid-Open Publication No. 2007-131730.
[Patent Document 3] Japanese Patent Laid-Open Publication No. 2011-52095.
[Patent Document 4] Japanese Patent Laid-Open Publication No. 2004-18682.
[Patent Document 5] Japanese Patent Laid-Open Publication No. 2002-371156.

### [Summary of the Invention]

### [Problems to Be Solved by the Invention]

Benzoic acid zinc and t-butyl benzoic acid zinc act as vulcanization activators when blended into a rubber composition. However, there is a problem that, since a transparent melting point is as high as 193 °C for benzoic acid zinc and 215 °C for t-butyl benzoic acid zinc, dispersibility during preparation of a rubber composition is poor, which causes nonuniform cross-linking, and low fuel consumption, elongation at break and crack growth resistance are deteriorated.

The present invention is intended to provide a rubber composition excellent in low fuel consumption, elongation at break and crack growth resistance.

### [Means for Solving the Problems]

The present inventor found that, by using benzoic acid zinc and/or t-butyl benzoic acid zinc in combination with silica and/or aluminum hydroxide, dispersibility of benzoic acid zinc and t-butyl benzoic acid zinc in a rubber composition is improved, and accomplished the present invention based on further studies. That is, the present invention relates to a rubber composition that contains a rubber component, 0.05 - 6.0 parts by mass of benzoic acid zinc and/or t-butyl benzoic acid zinc and 0.5 - 140 parts by mass of wet synthetic silica and/or aluminum hydroxide with respect to 100 parts by mass of the rubber component, wherein the benzoic acid zinc and/or t-butyl benzoic acid zinc is contained as a molten mixture with fatty acid zinc, and that the molten mixture has a melting point of 150 °C or less, and wherein the fatty acid zinc includes zinc oleate.

From a point of view of low fuel consumption, it is preferable that the rubber component contains a modified butadiene rubber having a cis-1,4 bond content of 55% or less.

Further, the present invention relates to a tire in which at least one member selected from a group consisting of a cap tread, a base tread, an outer-layer side wall, an inner-layer side wall, a breaker cushion and a breaker coating rubber is formed of the above-described rubber composition.

### [Effect of the Invention]

The rubber composition according to claim 1 of the present invention is excellent in low fuel consumption, elongation at break and crack growth resistance.

### [Mode for Carrying Out the Invention]

The rubber composition according to claim 1 of the present invention contains a predetermined amount of benzoic acid zinc and/or t-butyl benzoic acid zinc and a predetermined amount of silica and/or aluminum hydroxide with respect to a rubber component.

In the rubber composition of the present invention, by using benzoic acid zinc and/or t-butyl benzoic acid zinc in combination with wet synthetic silica and/or aluminum hydroxide, dispersibility of benzoic acid zinc and t-butyl benzoic acid zinc in the rubber composition is improved. As a result, uniform cross-linking is formed, and a rubber composition excellent in low fuel consumption, elongation at break and crack growth resistance is obtained. The benzoic acid zinc and t-butyl benzoic acid zinc are each an ion conjugate of R-COO²⁻ and Zn²⁺ and have high affinity for OH groups on surfaces of silica and aluminum hydroxide. Therefore, by using benzoic acid zinc and/or t-butyl benzoic acid zinc in combination with wet synthetic silica and/or aluminum hydroxide, dispersibility of benzoic acid zinc and t-butyl benzoic acid zinc in the rubber composition is improved.

The benzoic acid zinc and t-butyl benzoic acid zinc are contained as a molten mixture with fatty acid zinc because the molten mixture has a melting point (150 °C or less) that allows the molten mixture to be easily dispersed in a kneading process of the rubber composition even though the molten mixture is in a solid form, dispersibility of benzoic acid zinc and t-butyl benzoic acid zinc is further improved, and a rubber composition that is even more excellent in low fuel consumption, elongation at break and crack growth resistance can be obtained. The melting point is a temperature that is by 15 °C or more lower than 165 °C, which is a highest temperature reached during normal kneading of a silica compound and an aluminum hydroxide compound. From a point of view of further improving the dispersibility, the melting point is preferably 150 °C or less and more preferably 130 °C or less. The melting point of the molten mixture in the present invention is a transparent melting point measured according to JIS-K0064: 1992 "Melting Point and Melting Range Measurement Method of Chemical Products."

The molten mixture can be prepared by heating benzoic acid zinc or t-butyl benzoic acid zinc and fatty acid zinc to a temperature at which the two compounds melt while mixing the two compounds. The mixing method is not particularly limited. However, for example, a method can be adopted in which the two compounds are heated in a silicone oil bath while being stirred using a stirrer.

For the fatty acid zinc, the number of fatty acid carbon atoms is preferably 10 or more, and more preferably 12 or more. Further, from a point of view of availability, the number of carbon atoms is preferably 22 or less, and more preferably 20 or less. Examples of the fatty acid zinc include zinc laurate, zinc oleate, zinc stearate, and the like. These fatty acid zincs can each be used alone or two or more of these fatty acid zincs can be used in combination. The fatty acid zinc includes zinc oleate, since an oleic acid has high solubility in a rubber component, a low single-substance transparent melting point and good compatibility with adhesive resin. For a reason that zinc stearate has low solubility in a rubber component, is likely to cause blooming on a surface of a rubber composition, and has low adhesiveness, a content of zinc stearate is preferably 0.2 parts by mass or less with respect to 100 parts by mass of a rubber component.

From a point of view that the effect of the present invention can be significantly achieved, the molten mixture is preferably formed of 15 - 85 mass% of benzoic acid zinc or t-butyl benzoic acid zinc and 15 - 85 mass% of fatty acid zinc, and is more preferably formed of 25 - 75 mass% of benzoic acid zinc or t-butyl benzoic acid zinc and 25 - 75 mass% of fatty acid zinc.

A content of benzoic acid zinc and/or t-butyl benzoic acid zinc with respect to 100 parts by mass of a rubber component is 0.05 parts by mass or more, preferably 0.2 parts by mass or more, and more preferably 0.3 parts by mass or more. When the content of benzoic acid zinc and/or t-butyl benzoic acid zinc is less than 0.05 parts by mass, there is a tendency that the effect of the present invention cannot be sufficiently obtained. Further, the content of benzoic acid zinc and/or t-butyl benzoic acid zinc is 6.0 parts by mass or less, preferably 5.0 parts by mass or less, and more preferably 4.0 parts by mass or less. When the content of benzoic acid zinc and/or t-butyl benzoic acid zinc exceeds 6 parts by mass, there is a tendency that a cross-link promoting effect is saturated, filler dispersion is inhibited, and steering stability deteriorates.

Wet synthetic silica is silica obtained hydrolyzing silicon tetrachloride, silicate alkoxide, or the like, mixing silicate such as sodium silicate with an acid such as a sulfuric acid, and performing processes such as washing, aging and grinding. The wet synthetic silica contains a silanol group (Si-OH) in each molecule and thus can improve dispersibility of benzoic acid zinc and/or t-butyl benzoic acid zinc. Further, aluminum hydroxide also has OH groups on its surface and thus can improve dispersibility of benzoic acid zinc and/or t-butyl benzoic acid zinc.

From a point of view of wear resistance, elongation at break and crack growth resistance, a BET specific surface area (N₂SA) of wet synthetic silica is preferably 70 - 300 m²/g, more preferably 80 - 280 m²/g, and even more preferably 90 - 260 m²/g. The N₂SA of silica in the present specification is a value measured using a BET method in accordance with ASTM D3037-81.

From a point of view of wear resistance, elongation at break and grip performance, a BET specific surface area (N₂SA) of aluminum hydroxide is preferably 3 - 60 m²/g. The N₂SA of aluminum hydroxide in the present specification is a value measured using a BET method in accordance with ASTM D3037-81.

A content of wet synthetic silica and/or aluminum hydroxide with respect to 100 parts by mass of a rubber component is 0.5 parts by mass or more, preferably 1.0 parts by mass or more, and more preferably 2.0 parts by mass or more. When the content of wet synthetic silica and/or aluminum hydroxide is less than 0.5 parts by mass, there is a tendency that the effect of the present invention cannot be sufficiently obtained. Further, the content of wet synthetic silica and/or aluminum hydroxide is 140 parts by mass or less, preferably 130 parts by mass or less, and more preferably 125 parts by mass or less. When the rubber composition of the present invention is used for a tread or a cap tread of a tire, the content of the silica can be selected according to desired steerability, dry/wet grip performance, and discharge performance. Further, when the rubber composition of the present invention is used for an internal composition of a tire, for a reason that a cross-link promoting effect and cross-linking uniformity can be achieved, it is particularly preferable that the content of the silica be 2.0 - 20 parts by mass. Further, when the rubber composition of the present invention is used for a tread part of a race tire for which grip performance is particularly required, it is preferable that, in addition to carbon black, 5 - 40 parts by mass of aluminum hydroxide be contained.

It is preferable that wet synthetic silica be used in combination with a silane coupling agent. As the silane coupling agent, any conventional silane coupling agent that can be used in combination with silica in the rubber industry can be used. Examples of silane coupling agents include sulfide-based silane coupling agents such as bis(3-triethoxysilylpropyl) disulfide and bis(3-triethoxysilylpropyl) tetrasulfide, mercapto-based silane coupling agents (silane coupling agents having mercapto groups) such as 3-mercaptopropyltrimethoxysilane, and NXT-Z100, NXT-Z45 and NXT manufactured by Momentive Corporation, vinyl-based silane coupling agents such as vinyl triethoxysilane, amino-based silane coupling agents such as 3-aminopropyltriethoxysilane, glycidoxy-based silane coupling agents such as γ-glycidoxypropyltriethoxysilane, nitro-based silane coupling agents such as 3-Nitropropyltrimethoxysilane, chloro-based silane coupling agents such as 3-chloropropyltrimethoxysilane, and the like. These silane coupling agents may each be independently used, or two or more of these silane coupling agents may be used in combination.

When a silane coupling agent is contained, for a reason that a sufficient effect of improving filler dispersibility and effects such as viscosity reduction can be obtained, the content of the silane coupling agent with respect to 100 parts by mass of wet synthetic silica is preferably 4.0 parts by mass or more, and more preferably 6.0 parts by mass or more. Further, for a reason that a sufficient coupling effect and a sufficient silica dispersion effect cannot be obtained and a reinforcing property deteriorates, the content of the silane coupling agent is preferably 12 parts by mass or less, and more preferably 10 parts by mass or less. In the case of a rubber composition for an internal composition of a tire where, with respect to 100 parts by mass of a rubber component, the content of the silica is 15 parts by mass or less and the content of the carbon black is 20 parts by mass or more, it is also possible that a silane coupling agent is not contained.

The rubber component is not particularly limited. Examples of rubber components include: isoprene-based rubbers including a natural rubber (NR) and a polyisoprene rubber (IR); diene-based rubber components such as a butadiene rubber (BR), a styrene-butadiene copolymer rubber (SBR), a styrene-isoprene-butadiene copolymer rubber (SIBR), a chloroprene rubber (CR), and an acrylonitrile-butadiene copolymer rubber (NBR); butyl-based rubbers; and the like. These rubber components may each be independently used, or two or more of these rubber components may be used in combination. Among these rubber components, the diene-based rubber components are preferable, and from a point of view of low fuel consumption, elongation at break and crack growth resistance, NR, IR, BR, and SBR are preferably contained.

NR is not particularly limited, and those commonly known in the tire industry can be used, including, for example, SIR20, RSS#3, TSR20, and the like. Further, as the IR, those commonly known in the tire industry can be used.

When NR is included, for a reason that the effect of the present invention can be satisfactorily obtained, the content of NR in the rubber component is preferably 20 mass% or more, more preferably 30 mass%, and even more preferably 35 mass% or more. Further, from a point of view of low temperature characteristics, the content of NR is preferably 80 mass% or less, more preferably 70 mass% or less, and even more preferably 65 mass% or less.

BR is not particularly limited. For example, BR having a high cis content such as BR1220 manufactured by ZEON Corporation and BR130B, BR150B and the like manufactured by Ube Industries Ltd., modified BR such as BR1250H and like manufactured by ZEON Corporation, BR containing syndiotactic polybutadiene crystals such as VCR412, VCR617 and the like manufactured by Ube Industries Ltd., BR synthesized using a rare earth element-based catalyst such as BUNACB25 and the like manufactured by LANXESS Corporation, and the like can be used. These BRs may each be independently used, or two or more of these BRs may be used in combination. Among these BRs, from a point of view of low fuel consumption, elongation at break and crack growth resistance, the modified BR and the BR (rare earth-based BR) synthesized using a rare earth element-based catalyst are preferable

Examples of the modified BR include modified BR (tin-modified BR) obtained by polymerizing 1,3-butadiene using a lithium initiator and thereafter adding a tin compound and further causing terminals of modified BR molecules to be bonded by tin-carbon bonds, and butadiene rubber (modified BR for silica) having condensed alkoxysilane compounds at active terminals of the butadiene rubber, and the like. Examples of such modified BR include BR1250H (tin-modified BR) manufactured by ZEON Corporation and S-modified polymer (modified BR for silica) manufactured by Sumitomo Chemical Co., Ltd., and the like.

From a point of view of low fuel consumption, a cis-1,4 bond content (cis content) of the modified BR is preferably 55 mass% or less, and more preferably 50 mass% or less.

The rare earth-based BR is a butadiene rubber synthesized using a rare earth element-based catalyst, and is characterized by having a high cis content and a low vinyl content. As the rare earth-based BR, rare earth-based BR commonly known in the tire industry can be used.

As the rare earth element-based catalyst used for the synthesis of the rare earth-based BR, a commonly known rare earth element-based catalyst can be used. For example, catalysts containing a lanthanide series rare earth element compound, an organoaluminum compound, aluminoxane, a halogen-containing compound, and, when necessary, a Lewis base can be used. Among these catalysts, an Nd-based catalyst using a neodymium (Nd)-containing compound as a lanthanum series rare earth element compound is particularly preferable.

Examples of the lanthanide series rare earth element compound include halides, carboxylates, alcoholates, thioalcoholates, amides, and the like of rare earth metals having an atomic number of 57 - 71. Among these, the Nd-based catalyst is preferable in that a BR having a high cis content and a low vinyl content can be obtained.

As the organoaluminum compound, compounds represented by AlR^{a}R^{b}R^{c} (wherein R^{a}, R^{b} and R^{c} may be the same or different and each represent a hydrogen atom or a hydrocarbon group having 1 - 8 carbon atoms) can be used. Examples of the aluminoxane include chain aluminoxane and cyclic aluminoxane. Examples of the halogen-containing compound include: aluminum halides represented by AlXₖR^{d}₃₋ₖ (where X represents a halogen atom, R^{d} represents an alkyl group, an aryl group or an aralkyl group having 1 - 20 carbon atoms, and k represents 1, 1.5, 2 or 3): strontium halides such as Me₃SrCl, Me₂SrCl₂, MeSrHCl₂, and MeSrCl₃; and metal halides such as silicon tetrachloride, tin tetrachloride and titanium tetrachloride. The Lewis base is used in to complex a lanthanide series rare earth element compound. Acetylacetone, ketone, alcohol and the like are preferably used as Lewis bases.

During the polymerization of butadiene, the rare earth element-based catalyst may be used in a state of being dissolved in an organic solvent (such as n-hexane, cyclohexane, n-heptane, toluene, xylene, or benzene) or may be used by being carried on a suitable carrier such as silica, magnesia, or magnesium chloride. As polymerization conditions, either solution polymerization or bulk polymerization may be adopted. A preferred polymerization temperature range is from -30 to 150 °C, and a polymerization pressure may be arbitrarily selected depending on other conditions.

From a point of view of durability and wear resistance, the cis-1,4 bond content of the rare earth-based BR is preferably 90 mass% or more, more preferably 93 mass% or more, and even more preferably 95 mass% or more.

From a point of view of durability and wear resistance, the vinyl content of the rare earth-based BR is preferably 1.8 mass% or less, more preferably 1.5 mass%, even more preferably 1.0 mass%, and particularly preferably 0.8 mass% or less. In the present specification, the vinyl content (1,2-bond butadiene unit amount) and cis content (cis-1,4 bond content) of the BR can be measured using an infrared absorption spectrum analysis method.

When BR is included, from a point of view of low fuel consumption, elongation at break and crack growth resistance, the content of the BR in the rubber component is preferably 10 mass% or more, more preferably 15 mass% or more, and even more preferably 20 mass% or more. From a point of view of grip performance, the content of the BR is preferably 70 mass% or less, and more preferably 60 mass% or less. When dry grip performance is required, the content of the BR is preferably 40 mass% or less. When two or more types of BRs are used in combination, a total content of all the BRs is "the content of the BR" in the rubber component in the present invention.

SBR is not particularly limited. Examples of SBR include an emulsion-polymerized SBR (E-SBR), a solution-polymerized SBR(S-SBR) and the like. An SBR may be oil-extended or not oil-extended. Among these SBRs, from a point of view of grip performance, an SBR that is oil-extended and has a high molecular weight is preferable. Further, a terminal-modified S-SBR and a main chain-modified S-SBR, which have an increased interaction force with filler, can also be used. These SBRs may each be independently used, or two or more of these SBRs may be used in combination.

From a point of view of low fuel consumption, elongation at break and crack growth resistance, a styrene content of SBR is preferably 12 mass% or more, more preferably 20 mass% or more, even more preferably 25 mass% or more, and particularly preferably 30 mass% or more. Further, when the styrene content is too high, styrene groups become close to each other, and the polymer becomes too hard, and cross-linking is likely to become nonuniform, and there is a risk that a blowing property during high temperature traveling may deteriorate. Further, temperature dependence is increased, and a change in performance due to a change in temperature becomes large, and there is a tendency that stability during traveling cannot be satisfactorily obtained. Therefore, the styrene content is preferably 60 mass% or less, more preferably 50 mass% or less, and even more preferably 40 mass%. In the present specification, the styrene content of SBR is calculated based on ¹H-NMR measurement.

When SBR is included, from a point of view of low fuel consumption, elongation at break and crack growth resistance, the content of the SBR in the rubber component is preferably 10 mass% or more, and more preferably 20 mass% or more. When the rubber composition is for a tread of a race tire, the content of the SBR is particularly preferably 80 mass% or more, and preferably 100 mass%. When two or more types of SBRs are used in combination, a total content of all the SBRs is "the content of the SBR" in the rubber component in the present invention.

In addition to the above-described components, the rubber composition of the present invention may suitably contain compounding agents generally used for manufacturing a rubber composition, for example, a reinforcing filler other than the above-described wet synthetic silica and aluminum hydroxide, zinc oxide, stearic acid, a softening agent such as process oil and a liquid polymer, an anti-aging agent, wax, a vulcanization agent, a vulcanization accelerator, and the like.

The reinforcing filler is not particularly limited. Examples of the reinforcing filler include white fillers other than wet synthetic silica and aluminum hydroxide, and carbon black.

Examples of the white fillers other than wet synthetic silica and aluminum hydroxide include aluminum hydroxide, alumina (aluminum oxide), calcium carbonate, talc, and the like. These white fillers can each be independently used, or two or more of these white fillers can be used in combination.

From a point of view of a reinforcing property, a nitrogen adsorption specific surface area (N₂SA) of the carbon black is preferably 20 m²/g or more, more preferably 30 m²/g or more, and even more preferably 40 m²/g or more. Further, when a cap tread is formed using the rubber composition of the present invention, from a point of view of wear resistance, the N₂SA of the carbon black is preferably 70 m²/g or more. Further, when an inner member of a tire is formed using the rubber composition of the present invention, from a point of view of low fuel consumption, the N₂SA of the carbon black is 90 m²/g or less, preferably 70 m²/g or less, and more preferably 60 m²/g or less. The N₂SA of the carbon black in the present invention is a value measured according to Method A of JIS K 6217.

When carbon black is contained, for a reason of ensuring ultraviolet crack prevention performance, the content of the carbon black with respect to 100 parts by mass of the rubber component is 3 parts by mass or more. A preferred content of the carbon black varies depending on a member of a tire for which the rubber composition of the present invention is used and depending on an expected performance of the tire. In a case of a tread part or the like of a general purpose tire and ensuring wet grip performance of the tire using silica, the content of the carbon black with respect to 100 parts by mass of the rubber component is preferably 5 - 30 parts by mass. Further, in a case of a tread part or the like of a race tire and ensuring dry grip performance and wear resistance of the tire using carbon black, the content of the carbon black with respect to 100 parts by mass of the rubber component is preferably 40 - 140 parts by mass.

The rubber composition of the present invention can be manufactured using a commonly known method. For example, the rubber composition can be manufactured using a method in which, of the above-described components, components other than a cross-linking agent and a vulcanization accelerator are kneaded using a commonly known kneading machine used in general rubber industry such as a Banbury mixer, a kneader and an open roll, and thereafter, a cross-linking agent and a vulcanization accelerator are added to the kneaded material and the mixture is further kneaded, and thereafter, the kneaded material is vulcanized.

The rubber composition of the present invention can be used for tire members such as a cap tread, a base tread, an outer-layer side wall, an inner-layer side wall, a breaker cushion, a breaker coating rubber and a bead apex, and can also be used for other rubber industrial products such as a vibration damping rubber, a belt, and a hose. In particular, the rubber composition of the present invention is excellent in low heat generation, elongation at break and crack growth resistance, and thus can be preferably used for a cap tread and tire inner members such as a base tread, an outer-layer side wall, an inner-layer side wall, a breaker cushion, a breaker coating rubber and a bead apex.

A tire using the rubber composition of the present invention can be manufactured using a conventional method using the rubber composition. That is, a tire can be manufactured by extruding the rubber composition, in which the compounding agents are blended as needed with respect to the diene-based rubber component, according to shape of a tread or the like, bonding the extruded rubber composition together with other tire members on a tire molding machine to form an unvulcanized tire by performing molding using a conventional method, and applying heat and pressure to the unvulcanized tire in a vulcanizer.

### [Examples]

Based on Examples, the present invention is described in detail. However, the present invention is not to be construed as being limited to only these Examples.

Various chemicals used in Examples, Reference Examples and Comparative Examples are described here.
NR: TSR20
IR: Nipol IR2200 manufactured by ZEON Corporation
BR1: BR1250H (tin-modified BR, polymerized using lithium as an initiator; vinyl bond content: 10 - 13 mass%; Mw/Mn: 1.5; tin atom content: 250 ppm) manufactured by ZEON Corporation
BR2: VCR617 (syndiotactic 1,2-polybutadiene crystal dispersion, melting point of 1,2-syndiotactic polybutadiene crystal: 200 °C; content of boiling n-hexane insoluble matter: 15 - 18 mass%; content of 1,2-syndiotactic polybutadiene crystal: 17 mass%) manufactured by Ube Industries, Ltd.
BR3: BR150B (high cis BR, cis-1,4-butadiene unit amount: 97 mass%) manufactured by Ube Industries, Ltd.
BR4: silane-modified BR (self-made synthetic product)
Carbon black: Diablack E (N550) (N₂SA: 41 m²/g) manufactured by Mitsubishi Chemical Corporation
Silica: ULTRASIL VN3 (N₂SA: 175 m²/g) manufactured by Evonik Degussa Corporation Aluminum hydroxide: HIGILITE H-43 (N₂SA: 6.7 m²/g) manufactured by Showa Denko KK
Silane coupling agent: Si75 (bis-(3-triethoxysilylpropyl) disulfide) manufactured by Evonik Degussa Corporation
Benzoic acid zinc: benzoic acid zinc (melting point: 193 °C) manufactured by NOF Corporation t-butyl benzoic acid zinc: t-butyl benzoic acid zinc (melting point: 215 °C) manufactured by NOF Corporation
Zinc laurate: zinc laurate (melting point: 131 °C) manufactured by NOF Corporation
Zinc palmitate: zinc palmitate (melting point: 127 °C) manufactured by NOF Corporation
Zinc stearate: zinc stearate (melting point: 122 °C) manufactured by NOF Corporation
Zinc oleate: zinc oleate (melting point: 87 °C) manufactured by NOF Corporation
Mixed fatty acid zinc: EF44 (mixture of zinc oleate, zinc palmitate, and zinc stearate, melting point: 101 °C) manufactured by Structol Corporation
Molten mixtures 1 - 12: molten mixtures obtained in preparation of below-described molten mixtures
Oil: Vivatec500 (TDAE oil, Tg: -58 °C) manufactured by H&R Co., Ltd.
Resin: Marukarez T-100AS (an aliphatic petroleum resin mainly composed of olefins and diolefins in C5 fraction obtained by naphtha decomposition; softening point: 102 °C) manufactured by Maruzen Petrochemical Co., Ltd.
Wax: Ozoace 355 manufactured by Nippon Seiro Co., Ltd.
Anti-aging agent 1: Antigene 6C (6PPD, N-(1,3-dimethylbutyl)-N'-phenyl-p-phenylenediamine) manufactured by Sumitomo Chemical Co.
Anti-aging agent 2: Nocrac 224 (TMQ, 2,2,4-trimethyl-1,2-dihydroquinoline polymer) manufactured by Ouchi Shinko Chemical Industrial Co.
Stearic acid: Ginrei R manufactured by Toho Zinc Corporation
Zinc oxide: two kinds of zinc oxides manufactured by Mitsui Mining & Smelting Co., Ltd.
Sulfur: Seimi Sulfur (containing 10% of oil) manufactured by Nippon Drying Industry Co., Ltd.
Vulcanization accelerator: Nocceler NS-G (TBBS, N-tert-butyl-2-benzothiazylsulfenamide) manufactured by Ouchi Shinko Chemical Industry Co., Ltd.

### Preparation of Molten Mixture

A flask containing compounds shown in Table 1 was immersed in a silicone oil bath, stirring was performed using an electronic stirrer while raising temperature until both compounds melted. The flak was taken out and cooled and the content was ground in a mortar. Uniform molten mixtures 1 - 12 were obtained. Further, Table 1 also shows transparent melting points of the molten mixtures. The transparent melting points are values measured according to JIS-K0064: 1992 "Melting Point and Melting Range Measurement Method of Chemical Products."

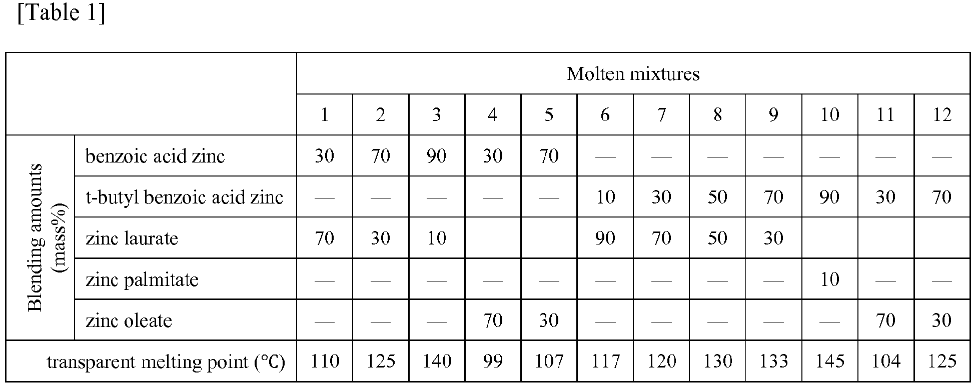

### Examples, Reference Examples and Comparative Examples

According to formulation shown in Tables 2 - 5, using a 1.7 L sealed Banbury mixer, chemicals other than sulfur and a vulcanization accelerator were kneaded for 5 minutes until a discharge temperature of 170 °C was reached, and a kneaded material was obtained. Further, the obtained kneaded material was again kneaded (re-mill) using the Banbury mixer for 4 minutes at a discharge temperature of 150 °C. Next, using a two-axis open roll, sulfur and a vulcanization accelerator were added to the obtained kneaded material and the mixture was kneaded for 4 minutes until a temperature of 105 °C was reached, and an unvulcanized rubber composition was obtained. The obtained unvulcanized rubber composition was press-unvulcanized for 12 minutes at 170 °C, and thereby a test rubber composition was prepared. Further, each unvulcanized rubber composition was extruded into a shape of an outer-layer side wall using an extruder equipped with a die of a predetermined shape, and was bonded together with other tire members to form an unvulcanized tire. The unvulcanized tire was press-unvulcanized at 170 °C for 12 minutes and thereby a test tire (tire size: 195/65R15) was manufactured. With respect to the obtained test rubber compositions and test tires, the following evaluations were conducted. The results are shown in Tables 2 - 5.

### Low Heat Generation

Using a viscoelasticity spectrometer VES manufactured by Iwamoto Seisakusho Co., Ltd., loss tangent tanδ of each test rubber composition was measured under conditions of a temperature of 70 °C, a frequency of 10 Hz, an initial strain of 10% and a dynamic strain of 2%. A smaller tanδ indicates a lower heat generation and a better low fuel consumption. The result was expressed as index number with a reciprocal of tanδ of Comparative Example 1 as 100. A larger index number indicates a better low fuel consumption. A performance target value is set to 105 or more for low heat generation index numbers.

### Elongation at Break

According to JIS K6251, a tensile test was performed using a No. 3 dumbbell, and elongation at break (EB%) of each test piece was measured. A higher value of the elongation at break indicates a better strength at break and a better crack growth resistance of the rubber composition. The result was expressed as index number with EB% of Comparative Example 1 as 100. A performance target value is set to 100 or more for elongation at break index numbers.

### Crack Growth Resistance

Four cuts each having a circumferential length of 2 mm and a depth of 1 mm were formed at a maximum strain position of a side wall of each test tire. Using a drum testing machine, the test tire was run on the drum for 30000 km at a speed of 40 km/h under conditions of a tire internal pressure of 850 kPa and a load of 37.5 kN, and lengths of the cuts after the running on the drum were measured and an average value was calculated. A lower average value indicates a better crack growth resistance. The result was expressed as index number with a reciprocal of the average value of Comparative Example 1 as 100. A performance target value is set to 100 or more for crack growth resistance index numbers.

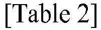

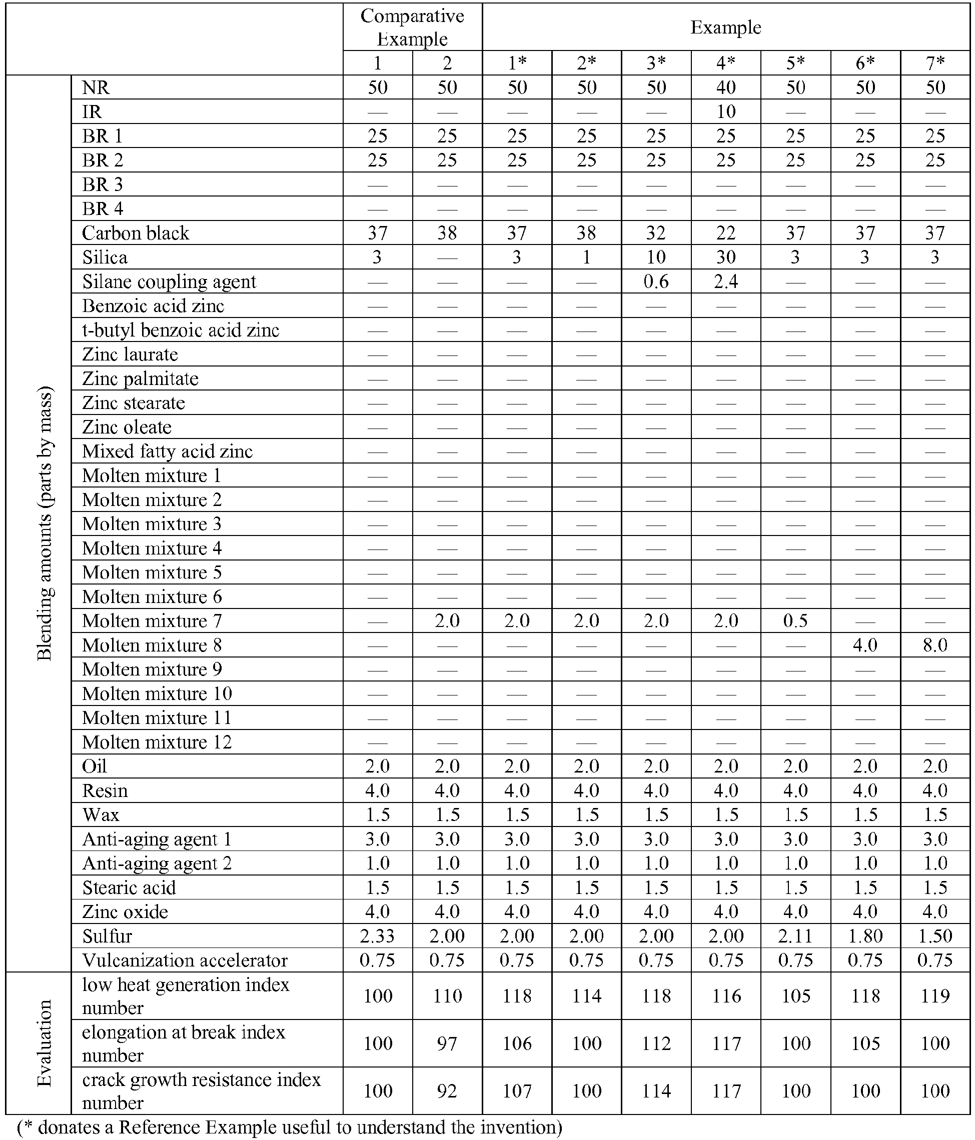

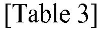

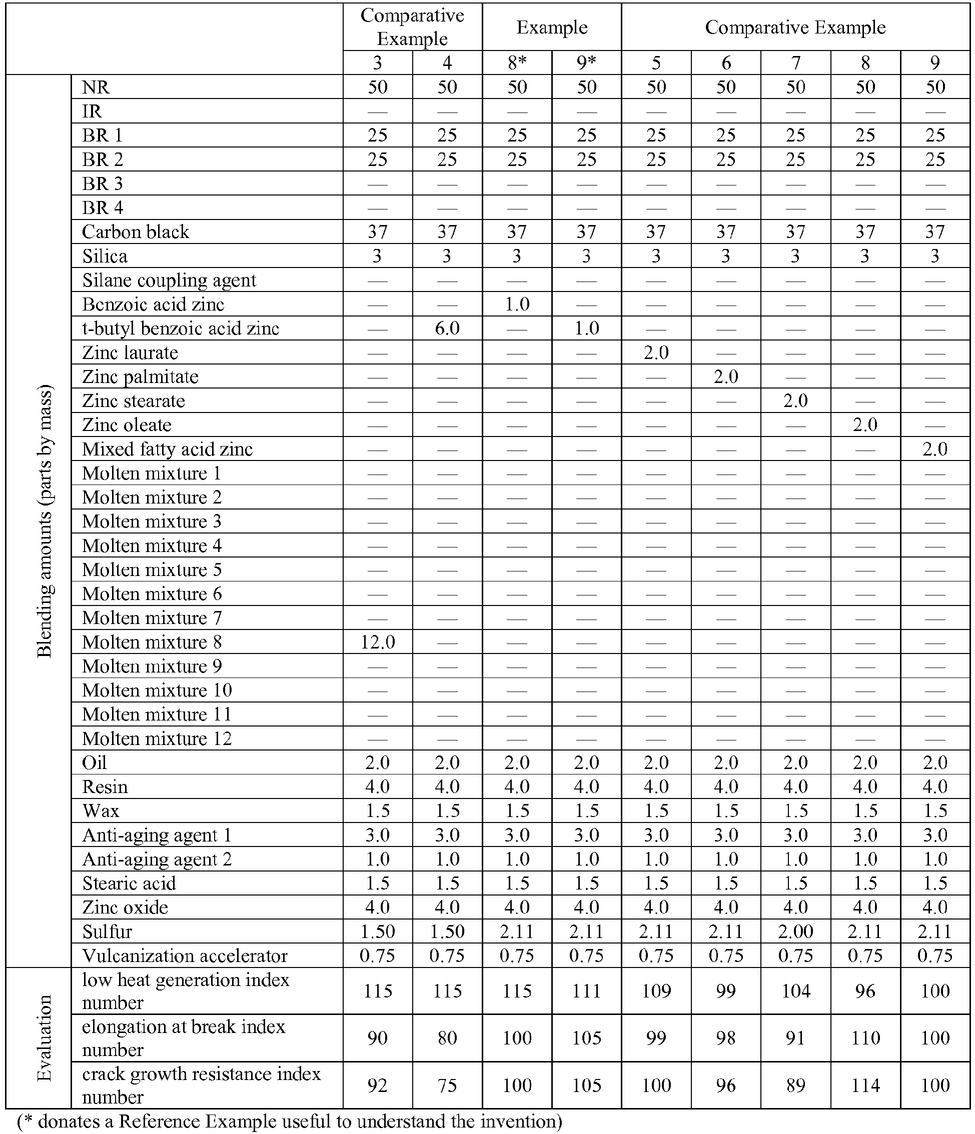

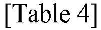

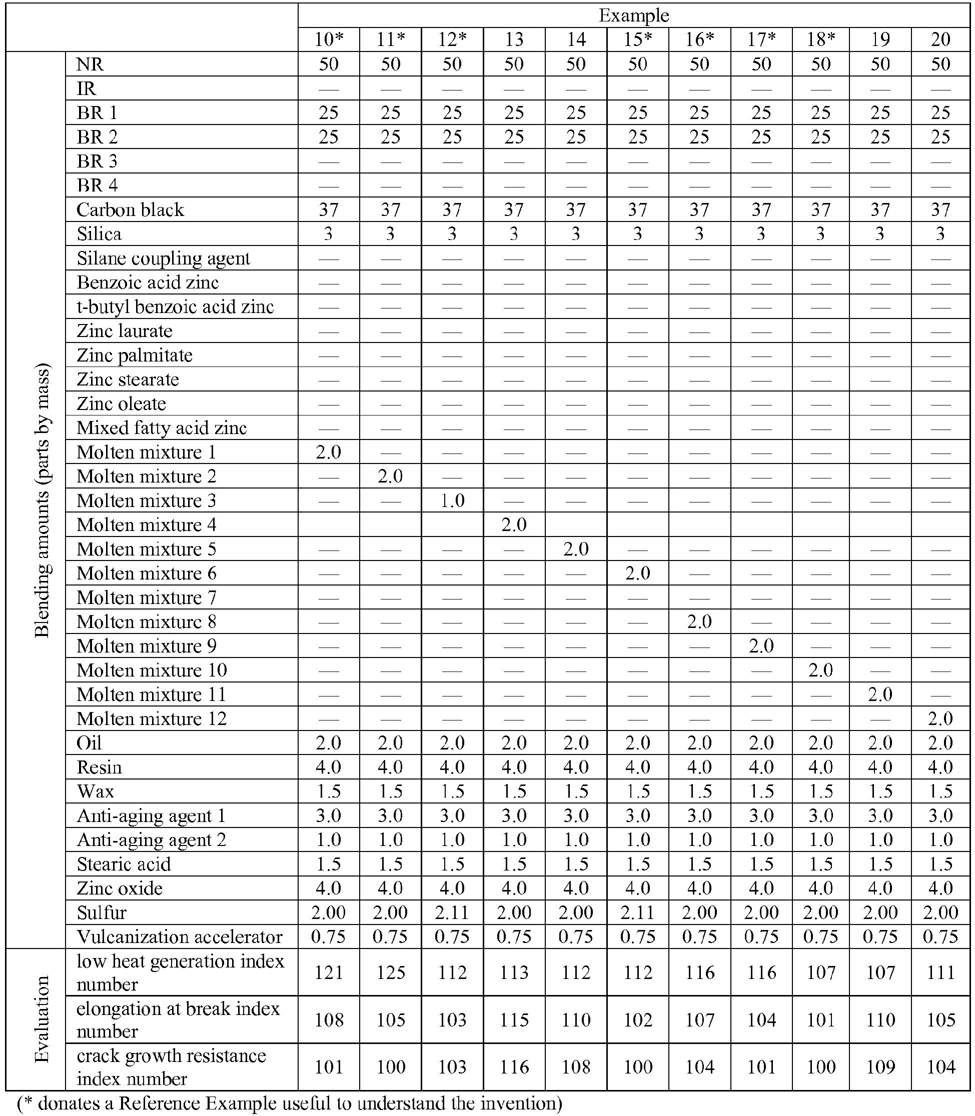

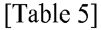

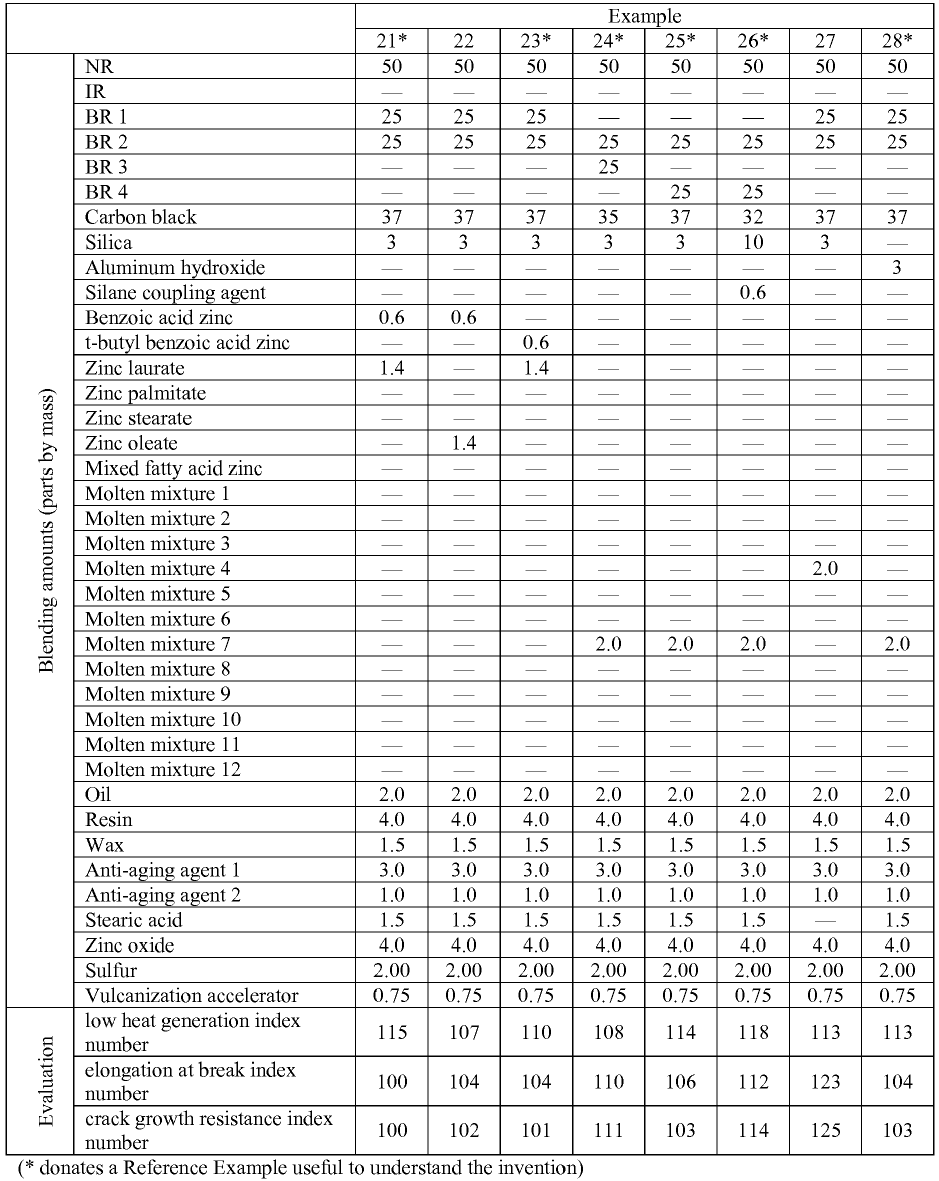

From the results of Tables 2 - 5, it is clear that the rubber composition of the present invention containing predetermined amounts of benzoic acid zinc and/or t-butyl benzoic acid zinc and wet synthetic silica and/or aluminum hydroxide with respect to 100 parts by mass of the rubber component is excellent in low fuel consumption, elongation at break and crack growth resistance. In particular, it is clear that the rubber compositions that respectively contain the molten mixtures 4, 5, and 11 that each contain 30 mass% or more of benzoic acid zinc or t-butyl benzoic acid zinc and each have a transparent melting point of 120 °C or less are excellent.

## Claims

1. A rubber composition containing a rubber component, 0.05 - 6.0 parts by mass of benzoic acid zinc and/or t-butyl benzoic acid zinc and 0.5 - 140 parts by mass of wet synthetic silica and/or aluminum hydroxide with respect to 100 parts by mass of the rubber component,
wherein the benzoic acid zinc and/or t-butyl benzoic acid zinc is contained as a molten mixture with fatty acid zinc, and the molten mixture has a melting point of 150°C or less, and wherein the fatty acid zinc includes zinc oleate.

2. The rubber composition according to claim 1, wherein the rubber component contains a modified butadiene rubber having a cis-1,4 bond content of 55% or less.

3. A tire wherein at least one member selected from a group consisting of a cap tread, a base tread, an outer-layer side wall, an inner-layer side wall, a breaker cushion and a breaker coating rubber is formed of the rubber composition according to claim 1 or 2.

## Patentansprüche

1. Kautschukzusammensetzung, die eine Kautschukkomponente, 0,05 - 6,0 Massenteile Zink Benzoesäure und/oder Zink t-Butylbenzoesäure und 0,5 - 140 Massenteile nasses synthetisches Silica und/oder Aluminiumhydroxid bezogen auf 100 Massenteile der Kautschukkomponente enthält,
wobei die Zink Benzoesäure und/oder Zink t-Butylbenzoesäure als geschmolzenes Gemisch mit Zinkfettsäure enthalten ist und das geschmolzene Gemisch einen Schmelzpunkt von 150°C oder weniger aufweist, und wobei die Zinkfettsäure Zinkoleat beinhaltet.

2. Kautschukzusammensetzung nach Anspruch 1, wobei die Kautschukkomponente einen modifizierten Butadienkautschuk mit einem cis-1,4-Bindungsanteil von 55 % oder weniger enthält.

3. Reifen, wobei zumindest ein Element, ausgewählt aus einer Gruppe, bestehend aus einer Laufflächenkrone, einer Basislauffläche, einer Außenschicht-Seitenwand, einer Innenschicht-Seitenwand, einem Gürtelkantenschutz und einem Gürtelbeschichtungskautschuk, aus der Kautschukzusammensetzung nach Anspruch 1 oder 2 gebildet ist.

## Revendications

1. Composition de caoutchouc contenant un composant caoutchouc, 0,05-6,0 parties en poids de zinc d'acide benzoïque et/ou de zinc d'acide t-butyl-benzoïque et 0,5-140 parties en poids de silice synthétique humide et/ou d'hydroxyde d'aluminium pour 100 parties en poids du composant caoutchouc,
dans laquelle le zinc d'acide benzoïque et/ou le zinc d'acide t-butyl-benzoïque est contenu sous forme de mélange à l'état fondu avec un zinc d'acide gras, et le mélange à l'état fondu a un point de fusion de 150 °C ou moins, et dans laquelle le zinc d'acide gras contient de l'oléate de zinc.

2. Composition de caoutchouc selon la revendication 1, dans laquelle le composant caoutchouc contient un caoutchouc butadiène modifié ayant une teneur en liaison cis-1,4 de 55 % ou moins.

3. Pneu dans lequel au moins un élément choisi dans un groupe constitué par une bande de roulement de chape, une bande de roulement de base, un flanc extérieur, un flanc intérieur, un entre-plis de gomme et une gomme de revêtement d'entre-plis est constitué de la composition de caoutchouc selon la revendication 1 ou 2.
